# EUROPÄISCHE PATENTSCHRIFT

(11) **EP 2 345 474 B1**
(45) Veröffentlichungstag und Bekanntmachung des Hinweises auf die Patenterteilung: **01.04.2015**
(21) Anmeldenummer: 11000268.0
(22) Anmeldetag: 14.01.2011
(51) Int. Cl.: B01F 15/00, B01F 15/02, B01F 7/00, A61C 5/06

(54) **Dentalvorrichtung zum Herstellen einer Mehrkomponentenmasse**
Dental device for manufacturing a multi-component mass
Dispositif dentaire pour la fabrication d'une masse de plusieurs composants

(30) Priorität: 18.01.2010 DE 202010001096 U
(43) Veröffentlichungstag der Anmeldung: 20.07.2011
(73) Patentinhaber: Renfert GmbH, 78247 Hilzingen (DE)
(72) Erfinder: Burgbacher, Tilo, 78465 Konstanz (DE); Witt, Maik, 78247 Hilzingen (DE); Wartenberg, Marco, 78224 Singen (DE); Goldhagen, Sven, 78224 Singen (DE); Bertiller, Marco, 78713 Schramberg (DE)
(74) Vertreter: Daub, Thomas

(56) Entgegenhaltungen:
- EP-A1- 1 279 379
- DE-A1- 4 320 365
- DE-A1- 19 951 504
- DE-A1-102005 017 743
- DE-A1-102005 022 978

## Beschreibung

### Stand der Technik

Die Erfindung geht aus von einer Dentalvorrichtung nach dem Oberbegriff des Anspruchs 1.

Aus der EP 1 140 370 B1 ist eine Dentalvorrichtung zum Herstellen einer Mehrkomponentenmasse mit einer Ausbringeinheit zum Ausbringen von Komponenten aus wenigstens zwei Komponentenbehältnissen und einer Mischereinheit zum Mischen der Komponenten bekannt. Die Dentalvorrichtung weist einen Schalter auf, mittels dessen eine Betätigung der Ausbringeinheit und der Mischereinheit eingeleitet werden kann. Ferner weist die Dentalvorrichtung eine Einrichtung auf, die zur automatischen Erfassung einer Markierung an einem Komponentenbehältnis und zu einer automatischen Steuerung einer Vorschubsgeschwindigkeit von Kolben der Ausbringeinheit sowie zu einer automatischen Steuerung einer Drehgeschwindigkeit eines Mischerrotors der Mischereinheit abhängig von der erfassten Markierung vorgesehen ist.

Aus der DE 199 51 504 A1 ist eine Dentalvorrichtung entsprechend dem Oberbegriff des Anspruch 1 bekannt.

### Vorteile der Erfindung

Die Erfindung geht aus von einer Dentalvorrichtung zum Herstellen wenigstens einer Mehrkomponentenmasse, mit wenigstens einer Ausbringeinheit zum Ausbringen von Komponenten und einer Mischereinheit zum Mischen von Komponenten und mit einer manuellen Eingabeeinheit sowie einer Auswerteeinheit, die zur Auswertung von Kenngrößen vorgesehen ist.

Es wird eine Dentalvorrichtung gemäß Patentanspruch 1 vorgeschlagen, wobei erfindungsgemäß die Auswerteeinheit dazu vorgesehen ist, wenigstens eine über die Eingabeeinheit eingegebene Eingabekenngröße bei einer komponentenbezogenen Einstellung wenigstens eines Mischparameters zu nutzen. Dabei soll unter einer "Einstellung eines Mischparameters" insbesondere eine Einstellung eines Parameters der Ausbringeinheit, wie insbesondere eine von der Ausbringeinheit erzeugte Volumenstromgröße, wie vorzugsweise durch Einstellung einer Vorschubsgeschwindigkeit wenigstens eines Ausbringkolbens, ein zeitlicher Volumenstromverlauf usw., und/oder eine Einstellung eines Parameters der Mischereinheit, wie vorzugsweise eine Drehgeschwindigkeit einer Mischerwelle, eine Einstellung eines Volumenstromverlaufs durch eine Mischeinheit usw., verstanden werden. Eine reine Aktivierung oder Deaktivierung eines Mischbetriebs sowie eine Aktivierung eines sich von einem Mischbetrieb unterscheidenden Vorgangs, wie insbesondere ein Rückstellvorgang zum Auswechseln von Komponentenbehältnissen, soll als ein sich vom Einstellen eines Mischparameters differenzierender Vorgang verstanden werden. Unter einer "Auswerteeinheit" soll eine mechanische, elektrische und/oder insbesondere elektronische Einheit verstanden werden, so dass die von einem Bediener über die Eingabeeinheit eingegebenen Kenngrößen bei der Einstellung des wenigstens einen Mischparameters berücksichtigt werden können. Besonders bevorzugt umfasst die Auswerteeinheit eine Steuer- und/oder Regeleinheit und insbesondere eine Recheneinheit, eine Speichereinheit und ein in der Speichereinheit gespeichertes Betriebsprogramm. Unter einer "Mehrkomponentenmasse" soll insbesondere eine Masse aus zumindest zwei miteinander vermischten Komponenten verstanden werden. Unter einer "manuellen Eingabeeinheit" soll insbesondere eine Einheit verstanden werden, die dazu vorgesehen ist, dass von einem Bediener Kenngrößen manuell eingegeben werden können. Hierzu weist die Eingabeeinheit insbesondere wenigstens ein akustisches, ein optisches und/oder ein taktiles Eingabemittel auf, wie beispielsweise ein Mikrophon zur Eingabe einer akustischen Kenngröße, eine Kamera und/oder einen Scanner zur Eingabe einer optischen Kenngröße und/oder einen Taster, einen Drehknebel, ein Touchelement usw. zur Eingabe einer taktilen Kenngröße. Unter "komponentenbezogenen Einstellungen" sollen insbesondere Einstellungen verstanden werden, die auf verschiedene Komponenten bezogen sind, und insbesondere speziell auf unterschiedliche Viskositäten und/oder Mischzeiten angepasste Einstellungen, insbesondere im Hinblick auf erforderliche bzw. vorteilhafte Mischparameter. Die Auswerteeinheit und die Eingabeeinheit sind demnach insbesondere dazu vorgesehen, dass mittels derer auf verschiedene Komponenten angepasste Mischparameter einstellbar sind, so dass insbesondere neben reinen anwendungsbezogenen Einstellungen zumindest zwei und vorzugsweise zumindest drei komponentenbezogene Einstellungen möglich sind. Ferner soll unter "vorgesehen" insbesondere speziell ausgestattet, ausgelegt und/oder programmiert verstanden werden. Durch eine erfindungsgemäße Ausgestaltung können vorteilhaft flexibel verschiedene Mehrkomponentenmassen hergestellt werden. Erfindungsgemäß wird vorgeschlagen, dass die Dentalvorrichtung wenigstens eine Erfassungseinheit aufweist, die dazu vorgesehen ist, wenigstens eine Kenngröße für einen Komponentenwechsel zu erfassen.Unter einer "Kenngröße für einen Komponentenwechsel" soll insbesondere eine Kenngröße verstanden werden, aufgrund der zumindest mit einer gewissen Wahrscheinlichkeit, vorzugsweise größer als 10% und insbesondere vorteilhaft größer als 50%, auf einen Wechsel wenigstens einer Komponente, auf einen geplanten Wechsel wenigstens einer Komponente und/oder auf einen unmittelbar bevorstehenden Wechsel wenigstens einer Komponente geschlossen werden kann. Durch eine entsprechende Ausgestaltung kann eine hohe Bediensicherheit erreicht werden, und zwar wenn erfindungsgemäß die Auswerteeinheit dazu vorgesehen ist, die erfasste Kenngröße bei einer Steuer- und/oder Regeleinstellung zu nutzen, und wenn die Auswerteeinheit dazu vorgesehen ist, die erfasste Kenngröße zu einer Rücksetzung zu nutzen. Unter einer "Rücksetzung" soll in diesem Zusammenhang ein Vorgang verstanden werden, bei dem eine Einstellung verändert wird, und zwar zurück auf eine bestimmte Grundeinstellung. Es wird eine Steuer- und/oder Regelgröße zurückgesetzt, die eine Auspressgeschwindigkeit der Ausbringeinheit bestimmt.

In einer Ausgestaltung wird vorgeschlagen, dass die Erfassungseinheit dazu vorgesehen ist, wenigstens eine komponentenunabhängige Kenngröße zu erfassen. Dabei soll unter einer "komponentenunabhängigen Kenngröße" insbesondere eine Kenngröße verstanden werden, die zumindest keinen direkten Schluss auf eine vorliegende Komponentenart und/oder Komponenteneigenschaft ermöglicht. Durch eine entsprechende Einheit ist eine besonders einfache Erfassung möglich. Die Erfassungseinheit kann verschiedene, dem Fachmann als sinnvoll erscheinende Kenngrößen erfassen, die auf einen Wechsel, einen geplanten Wechsel und/oder auf einen unmittelbar bevorstehenden Wechsel hinweisen. Besonders vorteilhaft ist jedoch die Erfassungseinheit dazu vorgesehen, eine Kenngröße eines Deckels eines Komponentenstauraums, eine Komponentenbehälterkenngröße und/oder eine auf einen Komponentenwechsel hinweisende Kenngröße der Ausbringeinheit zu erfassen. Dabei soll unter einer "Kenngröße eines Deckels" insbesondere eine Bewegungskenngröße, die vorzugsweise auf ein Öffnen des Deckels hinweist, und/oder eine auf eine Stellung, insbesondere auf eine Öffnungsstellung, des Deckels hinweisende Kenngröße verstanden werden. Unter einer "Komponentenbehälterkenngröße" soll insbesondere eine Bewegungskenngröße, die vorzugsweise auf ein Entfernen und/oder ein Einsetzen eines Komponentenbehälters hinweist, und/oder eine auf eine bestimmte Stellung eines Komponentenbehälters hinweisende Kenngröße verstanden werden. Ferner soll unter einer auf einen Komponentenwechsel hinweisenden Kenngröße der Ausbringeinheit insbesondere eine auf eine Stellung eines Auspresskolbens hinweisende Kenngrö-βe, eine auf eine bestimmte Bewegung eines Auspresskolbens hinweisende Kenngröße, wie insbesondere auf eine Rückhubbewegung, und/oder eine auf einen Füllstand eines Komponentenbehälters hinweisende Kenngröße verstanden werden, wie insbesondere eine auf einen leeren und/oder demnächst leeren Komponentenbehälter hinweisende Kenngröße. Mit entsprechenden Kenngrößen kann mit einer hohen Wahrscheinlichkeit auf einen Wechsel, einen geplanten Wechsel und/oder einen unmittelbar bevorstehenden Wechsel geschlossen werden. Ist die Erfassungseinheit dazu vorgesehen, eine auf einen Komponentenwechsel hinweisende Kenngröße der Ausbringeinheit zu erfassen, können vorzugsweise zusätzliche Erfassungsmittel, wie insbesondere Sensormittel, vermieden werden.

Ist die Auswerteeinheit dazu vorgesehen, die erfasste Kenngröße zu einer Ausgabe wenigstens einer Abfrageinformation zu nutzen, kann der Komfort weiter gesteigert werden, und zwar insbesondere kann einem Bediener eine Eingabe einer auf eine bestimmte Komponente hinweisende Kenngröße erspart werden, wenn eine Komponente durch eine gleiche Komponente bei einem Wechsel ersetzt wird. Unter einer "Ausgabe einer Abfrageinformation" soll dabei insbesondere eine Ausgabe einer Information verstanden werden, die eine Fragestellung an einen Bediener umfasst, wie insbesondere ob eine gleiche und/oder eine andere Komponente nach einem Wechsel verwendet werden soll bzw. verwendet wird. Wird eine gleiche Komponente nach einem Wechsel verwendet, kann ein Bediener komfortabel bei einer entsprechenden Abfrageinformation durch eine Bestätigung eine bestimmte Einstellung beibehalten.

In einer weiteren Ausgestaltung der Erfindung wird vorgeschlagen, dass die Auswerteeinheit dazu vorgesehen ist, wenigstens in einem Modus wenigstens eine Eingabekenngröße wenigstens eines Betätigungsschaltelements der Eingabeeinheit bei der Einstellung des wenigstens einen Mischparameters zu nutzen. Unter einem "Betätigungsschaltelement" der Eingabeeinheit soll in diesem Zusammenhang insbesondere ein Element verstanden werden, das dazu vorgesehen ist, von einem Bediener ner betätigt zu werden, um einen Ausbringvorgang und/oder einen Mischvorgang zu aktivieren und/oder zu deaktivieren. Durch eine entsprechende Doppelbelegung eines Betätigungselements können zusätzliche Betätigungselemente, Montageaufwand und Kosten eingespart werden. Besonders vorteilhaft ist die Auswerteeinheit dabei dazu vorgesehen, bei zumindest zwei zeitlich versetzten Betätigungen, insbesondere bei zumindest zwei aufeinander folgenden Betätigungen, zwei verschiedene Einstellungen zu aktivieren.

Ferner kann eine einfache und selbsterklärende Bedienung erreicht werden, wenn die Eingabeeinheit wenigstens zwei unterschiedliche graphische Eingabesymbole aufweist, die unterschiedlichen Steuer- und/oder Regelungsparametern zugeordnet sind, die Eingabeeinheit wenigstens eine Nummern- und/oder Buchstabeneingabeeinheit aufweist und/oder die Eingabeeinheit wenigstens ein Touchbedienelement aufweist. Dabei soll unter einem "graphischen Eingabesymbol" insbesondere ein von einem Buchstaben und einer Ziffer differenziertes Symbol verstanden werden, wie insbesondere geometrische Formen, wie Kreise, Rechtecke, Vielecke usw., so dass insbesondere eine landessprachenunabhängige Eingabe ermöglicht werden kann. Die Eingabesymbole können dabei auf jeweils für sie vorgesehene Bedienelemente angeordnet sein und/oder können auch auf einem Touchscreen eingeblendet sein. Unter einem "Touchbedienelement" soll in diesem Zusammenhang insbesondere ein Element verstanden werden, das ohne eine Stellbewegung des Elements selbst, wie beispielsweise einen Betätigungshub, durch drucklose Berührung betätigt werden kann und insbesondere kapazitive, induktive und/oder optische Sensoren aufweist.

Ferner wird ein System mit einer erfindungsgemäßen Dentalvorrichtung und wenigstens einer Komponenteneinheit vorgeschlagen. Dabei soll unter einer "Komponenteneinheit" insbesondere eine zu mischende Komponente, ein Komponentenbehältnis und/oder ein Verpackungsmaterial eines Komponentenbehältnisses verstanden werden, wie insbesondere die Verpackung selbst, eine Bedienungsanleitung, ein Beipackzettel usw. Durch eine entsprechende Ausgestaltung kann eine vorteilhafte Abstimmung ermöglicht werden.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine räumliche Darstellung der Dentalvorrichtung und
- Fig. 2: einen vergrößerten Ausschnitt einer Draufsicht der Dentalvorrichtung aus Figur 1.

### Beschreibung der Ausführungsbeispiele

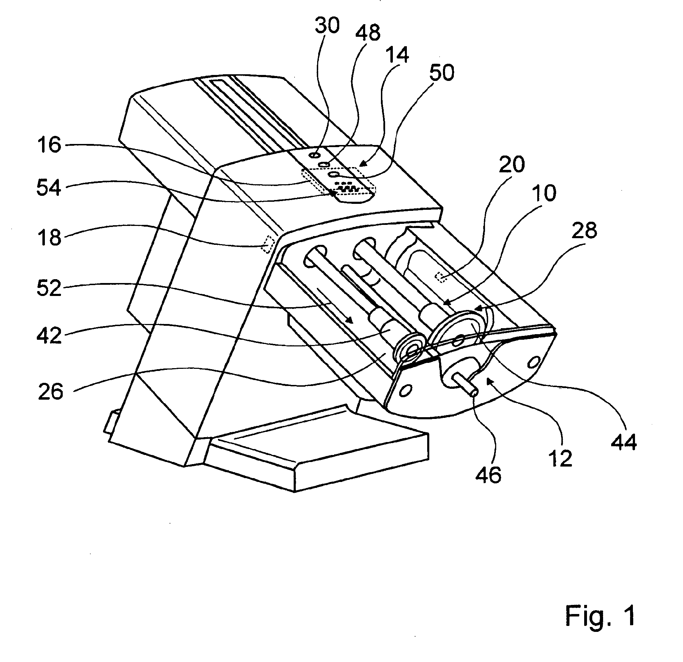

Figur 1 zeigt eine Dentalvorrichtung zum Herstellen einer Mehrkomponentenmasse mit einer Ausbringeinheit 10 zum Ausbringen von Komponenten aus nicht näher dargestellten Komponentenbehältnissen. Die Ausbringeinheit 10 weist zwei mittels eines Elektromotors translatorisch antreibbare Auspressstempel 42, 44 auf. Zudem umfasst die Dentalvorrichtung eine dynamische Mischereinheit 12 zum Mischen der Komponenten. Die Mischereinheit 12 weist eine Mischerwelle 46 auf, die zum Antrieb von Mischerflügeln eines auf die Mischerwelle 46 aufsetzbaren Mischaufsatzes vorgesehen ist. Ferner umfasst die Dentalvorrichtung eine manuelle Eingabeeinheit 14 sowie eine Auswerteeinheit 16, die zur Auswertung von Kenngrößen vorgesehen ist. Die Eingabeeinheit 14 umfasst drei Betätigungsschaltelemente 30, 48, 50, und zwar ein Betätigungsschaltelement 30, das einem Rückfahrmodus der Auspressstempel 42, 44 zugeordnet ist, ein Betätigungsschaltelement 48, das einem langsamen Vorschubbetrieb der Auspressstempel 42, 44 für eine erste Anwendung zugeordnet ist und ein Betätigungsschaltelement 50, das einem schnellen Vorschubbetrieb der Auspressstempel 42, 44 für eine zweite Anwendung zugeordnet ist. Die Auswerteeinheit 16 umfasst eine Recheneinheit, eine Speichereinheit und ein darin gespeichertes Betriebsprogramm.

Die Auswerteeinheit 16 ist dazu vorgesehen, über die Eingabeeinheit 14 eingegebene Eingabekenngrößen bei einer komponentenbezogenen Einstellung von Mischparametern zu nutzen, und zwar ist die Auswerteeinheit 16 dazu vorgesehen, in einem Modus, bei dem die Auspressstempel 42, 44 in vollständig zurückgefahrenen Stellungen sind, Eingabekenngrößen des Betätigungsschaltelements 30 der Eingabeeinheit 14 bei der Einstellung der Mischparameter zu nutzen.

Sind die Auspressstempel 42, 44 entgegen einer Auspressrichtung 52 vollständig in ihre Endstellungen verfahren, können durch Betätigungen des Betätigungsschaltelements 30 verschiedene Mischparameter, wie insbesondere eine Vorschubgeschwindigkeit der Auspressstempel 42, 44 und eine Drehzahl der Mischerwelle 46, komponentenbezogen eingestellt werden. Abhängig wie oft das Betätigungsschaltelement 30 betätigt, d.h. gedrückt wird, findet jeweils eine spezielle komponentenbezogene Einstellung statt. Die Dentalvorrichtung weist ein Display 54 mit mehreren Leuchtmitteln auf. Die Leuchtmittel werden von LEDs gebildet. Abhängig von dem, welche komponentenbezogene Einstellung ausgewählt ist, leuchten unterschiedliche Leuchtmittel des Displays 54 und zeigen ein bestimmtes Muster. Auf Komponentenbehältnisse, die zur Verwendung mit der Dentalvorrichtung vorgesehen sind, und/oder auf Verpackungsmaterial der Komponentenbehältnisse sind durch das Display 54 darstellbare Muster aufgebracht. Dabei sollen unter "Verpackungsmaterial" sämtliche mitgelieferte Bestandteile verstanden werden, wie insbesondere die Verpackung selbst, Beipackzettel, Bedienungsanleitung usw. Um eine auf vorliegende Komponenten angepasste Einstellung zu erreichen, betätigt ein Bediener das Betätigungsschaltelement 30 so oft, bis auf dem Display 54 ein mit dem auf den vorliegenden Komponentenbehältnissen und/oder Verpackung angebrachtes Muster übereinstimmendes Muster erscheint.

Die Dentalvorrichtung weist eine Erfassungseinheit 18 auf, die dazu vorgesehen ist, eine Kenngröße für einen Komponentenwechsel zu erfassen. Die Erfassungseinheit 18 ist dazu vorgesehen, eine komponentenunabhängige Kenngröße zu erfassen, und zwar eine Kenngröße eines Deckels 26 eines Komponentenstauraums 28. Die Auswerteeinheit 16 ist dabei dazu vorgesehen, die erfasste Kenngröße bei einer Steuer- und Regeleinstellung zu nutzen, und zwar ist die Auswerteeinheit 16 dazu vorgesehen, die erfasste Kenngröße zu einer Rücksetzung zu nutzen. Mittels der Erfassungseinheit 18 wird ein Öffnen des Deckels 26 erfasst. Ein von der Erfassungseinheit 18 entsprechendes Signal wird von der Auswerteeinheit 16 ausgewertet und die von einem Bediener mittels des Betätigungsschaltelements 30 vorgenommene, komponentenbezogene Einstellung wird auf eine Grundeinstellung zurückgesetzt, und zwar auf eine Grundeinstellung mit einer bezogen auf andere Einstellungen langsamen Vorschubsgeschwindigkeit der Auspressstempel 42, 44. Damit kann sichergestellt werden, dass bei einem Komponentenwechsel versehentlich eine unpassende Einstellung auf zuvor verwendete Komponenten beibehalten wird. Wird der Deckel 26 wieder geschlossen, wird dies wiederum von der Erfassungseinheit 18 erfasst. Ein entsprechendes Signal der Erfassungseinheit 18 wird von der Auswerteeinheit 16 ausgegeben, um anschließend eine Abfrageinformation an einen Bediener über das Display 54 auszugeben. Dabei blinken alle Leuchtelemente des Displays 54 und fordern damit einen Bediener auf, eine komponentenbezogene Einstellung vorzunehmen.

Alternativ zu einem Rücksetzen könnte die Auswerteeinheit 16 auch dazu vorgesehen sein, eine Abfrageinformation auszugeben, mittels der ein Bediener abgefragt wird, ob die nach einem Wechsel verwendeten neuen Komponenten den vor dem Wechsel verwendeten Komponenten entsprechen, wodurch eine Einstellung vereinfacht werden kann, insbesondere indem einzelne Eingabeschritte eingespart werden könnten.

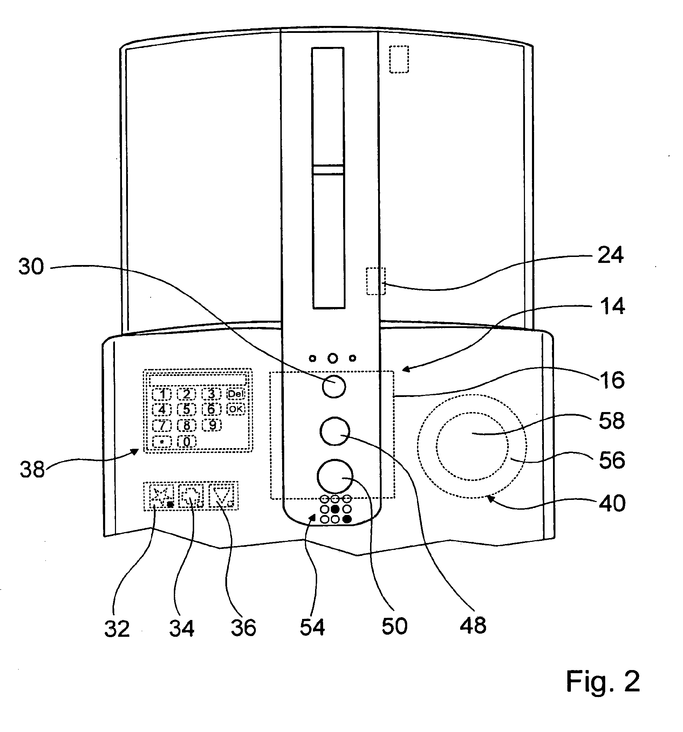

Ferner könnten alternativ oder zusätzlich zu der Erfassungseinheit 18 andere Erfassungseinheiten 20, 24 vorgesehen sein, wie diese in den Figuren 1 und 2 angedeutet sind. Die Erfassungseinheiten 20, 24 sind ebenfalls dazu vorgesehen, komponentenunabhängige Kenngrößen zu erfassen. Die Erfassungseinheit 24 ist dazu vorgesehen, eine auf einen Komponentenwechsel hinweisende Kenngröße der Ausbringeinheit 10 zu erfassen, und zwar ist die Erfassungseinheit 24 dazu vorgesehen, eine Füllstandskenngröße zu erfassen, aus der geschlossen werden kann, dass ein Komponentenwechsel erforderlich ist. Von der Erfassungseinheit 24 kann erkannt werden, dass die Auspressstempel 42, 44 in Auspressrichtung 52 eine Endstellung erreicht haben. Alternativ und/oder zusätzlich könnten von der Erfassungseinheit 24 wenigstens eine Rückstellbewegung der Auspressstempel 42, 44 und/oder wenigstens eine Endstellung der Auspressstempel 42, 44 entgegen der Auspressrichtung 52 erfasst werden. Entsprechende Signale könnten von der Auswerteeinheit 16 ausgewertet werden, um auf einen Komponentenwechsel zu schließen.

Die Erfassungseinheit 20 ist dazu vorgesehen, Komponentenbehälterkenngrößen zu erfassen. Die Erfassungseinheit 20 dient dazu, ein Vorhandensein eines Komponentenbehälters zu erfassen, könnte jedoch auch dazu vorgesehen sein, eine Bewegung und/oder eine bestimmte Stellung eines Komponentenbehälters zu erfassen. Die Erfassungseinheit 20 weist hierzu vorzugsweise ein optisches Sensorelement auf. Alternativ oder zusätzlich zu dem als Eingabeelement dienenden Betätigungsschaltelement 30 könnten auch andere Elemente vorgesehen sein. Die Eingabeeinheit 14 könnte unterschiedliche, auf einzelnen Bedienelementen angeordnete graphische Eingabesymbole 32, 34, 36 aufweisen, wie dies in Figur 2 angedeutet ist, die zur Durchführung einer komponentenbezogenen Einstellung unterschiedlichen Steuer- und/oder Regelungsparameter zugeordnet sind. Vorzugsweise stimmen die Eingabesymbole 32, 34, 36 mit auf Komponentenbehältnissen und/oder auf Verpackungen von Komponentenbehältnissen angebrachten Symbolen überein, die zur Anwendung mit der Dentalvorrichtung vorgesehen sind. Die Eingabesymbole 32, 34, 36 könnten auch auf einem berührempfindlichen Bildschirm dargestellt sein.

Ferner könnte die Eingabeeinheit 14 eine Nummerneingabeeinheit 38 und/oder ein Touchbedienelement 40 zur Durchführung einer komponentenbezogenen Einstellung aufweisen, wie dies ebenfalls in Figur 2 angedeutet ist. Bei dem Touchbedienelement 40 bietet sich vorteilhaft ein berührempfindliches, ringförmiges Feld 56 an. Wird mit einem Finger auf dem Feld 56 verfahren, können dadurch verschiedene Einstellungen, insbesondere komponentenbezogene Einstellungen, vorgenommen werden. Innerhalb des Felds 56 ist vorzugsweise ein Display 58 zur Ausgabe von Einstellinformationen angeordnet.

### Bezugszeichen

- 10: Ausbringeinheit
- 12: Mischereinheit
- 14: Eingabeeinheit
- 16: Auswerteeinheit
- 18: Erfassungseinheit
- 20: Erfassungseinheit
- 24: Erfassungseinheit
- 26: Deckel
- 28: Komponentenstauraum
- 30: Betätigungsschaltelement
- 32: Eingabesymbol
- 34: Eingabesymbol
- 36: Eingabesymbol
- 38: Nummerneingabeeinheit
- 40: Touchbedienelement
- 42: Auspressstempel
- 44: Auspressstempel
- 46: Mischerwelle
- 48: Betätigungsschaltelement
- 50: Betätigungsschaltelement
- 52: Auspressrichtung
- 54: Display
- 56: Feld
- 58: Display

## Patentansprüche

1. Dentalvorrichtung zum Herstellen wenigstens einer Mehrkomponentenmasse, mit wenigstens einer Anspressstempel aufweisen den Ausbringeinheit (10) zum Ausbringen von Komponenten und einer Mischereinheit (12) zum Mischen von Komponenten, mit einer manuellen Eingabeeinheit (14) sowie einer Auswerteeinheit (16), die zur Auswertung von Kenngrößen vorgesehen ist, und mit wenigstens einer Erfassungseinheit (18; 20; 24), die dazu vorgesehen ist, wenigstens eine Kenngröße für einen Komponentenwechsel zu erfassen, wobei die Auswerteeinheit (16) dazu vorgesehen ist, wenigstens eine über die Eingabeeinheit (14) eingegebene Eingabekenngröße bei einer komponentenbezogenen Einstellung wenigstens eines Mischparameters zu nutzen, und wobei die Auswerteeinheit (16) dazu vorgesehen ist, die erfasste Kenngröße für einen Komponentenwechsel bei einer Steuer- und/oder Regeleinstellung zu nutzen,
**dadurch gekennzeichnet**,
dass die Auswerteeinheit (16) dazu vorgesehen ist, die erfasste Kenngröße für einen Komponentenwechsel zu einer Rücksetzung, und zwar zurück auf eine bestimmte Grundeinstellung, einer Steuer- und/oder Regelgröße zu nutzen, wobei die von einem Bediener vorgenommene, komponentenbezogene Einstellung auf diese bestimmte Grundeinstellung zurückgesetzt wird, und zwar auf eine Grundeinstellung mit einer bezogen auf andere Einstellungen langsamen Vorschubgeschwindigkeit der Auspressstempel (42; 44).

2. Dentalvorrichtung nach Anspruch 1,
**dadurch gekennzeichnet**,
dass die Erfassungseinheit (18; 20; 24) dazu vorgesehen ist, wenigstens eine komponentenunabhängige Kenngröße zu erfassen.

3. Dentalvorrichtung nach Anspruch 1 oder 2,
**dadurch gekennzeichnet**,
dass die Erfassungseinheit (18) dazu vorgesehen ist, eine Kenngröße eines Deckels (26) eines Komponentenstauraums (28) zu erfassen.

4. Dentalvorrichtung nach einem der Ansprüche 1 bis 3,
**dadurch gekennzeichnet**,
dass die Erfassungseinheit (20) dazu vorgesehen ist, eine Komponentenbehälterkenngröße zu erfassen.

5. Dentalvorrichtung nach einem der Ansprüche 1 bis 4,
**dadurch gekennzeichnet**,
dass die Erfassungseinheit (24) dazu vorgesehen ist, eine auf einen Komponentenwechsel hinweisende Kenngröße der Ausbringeinheit (10) zu erfassen.

6. Dentalvorrichtung nach einem der Ansprüche 1 bis 5,
**dadurch gekennzeichnet**,
dass die Auswerteeinheit (16) dazu vorgesehen ist, die erfasste Kenngröße zu einer Ausgabe wenigstens einer Abfrageinformation zu nutzen.

7. Dentalvorrichtung nach einem der vorhergehenden Ansprüche,
**dadurch gekennzeichnet**,
dass die Auswerteeinheit (16) dazu vorgesehen ist, wenigstens in einem Modus wenigstens eine Eingabekenngröße wenigstens eines Betätigungsschaltelements (30) der Eingabeeinheit (14) bei der Einstellung des wenigstens einen Mischparameters zu nutzen.

8. Dentalvorrichtung nach einem der vorhergehenden Ansprüche,
**dadurch gekennzeichnet**,
dass die Eingabeeinheit (14) wenigstens zwei unterschiedliche graphische Eingabesymbole (32, 34, 36) aufweist, die unterschiedlichen Steuer- und/oder Regelungsparametern zugeordnet sind.

9. Dentalvorrichtung nach einem der vorhergehenden Ansprüche,
**dadurch gekennzeichnet**,
dass die Eingabeeinheit (14) wenigstens eine Nummern- und/oder Buchstabeneingabeeinheit (38) aufweist.

10. Dentalvorrichtung nach einem der vorhergehenden Ansprüche,
**dadurch gekennzeichnet**,
dass die Eingabeeinheit (14) wenigstens ein Touchbedienelement (40) aufweist.

11. System mit einer Dentalvorrichtung nach einem der vorhergehenden Ansprüche und wenigstens einer Komponenteneinheit.

## Claims

1. Dental device for manufacturing at least one multi-component mass, with at least one spreading unit (10) for spreading components that comprises pressing plungers (42; 44) and with a mixer unit (12) for mixing components, with a manual input unit (14) and with an evaluation unit (16) which is provided for evaluating characteristics, and with at least one capturing unit (18; 20; 24), which is provided to capture at least one characteristic for a change of components, wherein the evaluation unit (16) is provided to use, in a component-related adjustment of at least one mixing parameter, at least one input characteristic entered via the input unit (14), and wherein the evaluation unit (16) is provided to use the captured characteristic for a change of components in a control and/or regulation adjustment,
**characterized in that**
the evaluation unit (16) is provided to make use of the captured characteristic for a change of components in a reset, namely a reset back to a certain basis adjustment, of a control and/or regulation magnitude, wherein the component-related adjustment done by an operator is reset to said certain basis adjustment, namely to a basis adjustment with an advance velocity of the pressing plungers (42; 44) that is slow with respect to other adjustments.

2. Dental device according to claim 1,
**characterized in that**
the capturing unit (18; 20; 24) is provided to capture at least one characteristic that is independent from components.

3. Dental device according to claim 1 or 2,
**characterized in that**
the capturing unit (18) is provided to capture a characteristic of a lid (26) of a component storage space (28).

4. Dental device according to one of claims 1 to 3,
**characterized in that**
the capturing unit (20) is provided to capture a component container characteristic.

5. Dental device according to one of claims 1 to 4,
**characterized in that**
the capturing unit (24) is provided to capture a characteristic of the spreading unit (10) that indicates a component change.

6. Dental device according to one of claims 1 to 5,
**characterized in that**
the evaluation unit (16) is provided to use the captured characteristic for an output of at least one query information.

7. Dental device according to one of the preceding claims,
**characterized in that**
the evaluation unit (16) is provided to use, in at least one mode, at least one input characteristic of at least one actuation switch element (30) of the input unit (14) when adjusting the at least one mixing parameter.

8. Dental device according to one of the preceding claims,
**characterized in that**
the input unit (14) comprises at least two differing graphic input symbols (32, 34, 36), which are assigned to differing control and/or regulation parameters.

9. Dental device according to one of the preceding claims,
**characterized in that**
the input unit (14) comprises at least one numeral and/or letter input unit (38).

10. Dental device according to one of the preceding claims,
**characterized in that**
the input unit (14) comprises at least one touch-operating element (40).

11. System with a dental device according to one of the preceding claims and with at least one component unit.

## Revendications

1. Dispositif dentaire pour manufacturer au moins une masse multi-composant, avec au moins une unité épandeur (10) pour épandre des composants, qui présente des tampons de pressurage (42; 44), et une unité mélangeur (12) pour mélanger des composants, avec une unité d'input (14) manuelle et avec une unité d'évaluation (16) prévue à évaluer des caractéristiques, et avec au moins une unité de captage (18; 20; 24), qui est prévue à capturer au moins une caractéristique pour un changement des composants,
l'unité d'évaluation (16) étant prévue à utiliser, dans un ajustage relatif à des composants, d'au moins un paramètre de mélange, au moins une caractéristique d'input qui a été entrée par le biais de l'unité d'input (14),
et l'unité d'évaluation (16) étant prévue à utiliser dans un ajustement de contrôle et/ou régulation la caractéristique capturée pour un changement de composants,
**caractérisé en ce que**
l'unité d'évaluation (16) est prévue à utiliser la caractéristique capturée pour un changement de composants dans le but de remettre une grandeur de contrôle et/ou régulation, à savoir pour la remettre à un certain ajustage basique, l'ajustage relatif aux composants effectué par un opérateur étant remis à cet ajustage certain, à savoir à un ajustage basique avec une vélocité d'avance des tampons de pressurage (42; 44) lente relatif à des autres ajustages.

2. Dispositif dentaire selon la revendication 1,
**caractérisé en ce que**
l'unité de captage (18 ; 20 ; 24) est prévue à capturer au moins une caractéristique qui est indépendante des composants.

3. Dispositif dentaire selon l'une quelconque des revendications 1 ou 2,
**caractérisé en ce que**
l'unité de captage (18) est prévue à capturer une caractéristique d'un couvercle (26) d'une espace de rangement (28) des composants.

4. Dispositif dentaire selon l'une quelconque des revendications 1 à 3,
**caractérisé en ce que**
l'unité de captage (20) est prévue à capturer une caractéristique d'un réservoir des composants.

5. Dispositif dentaire selon l'une quelconque des revendications 1 à 4,
**caractérisé en ce que**
l'unité de captage (24) est prévue à capturer une caractéristique de l'unité épandeur (10) indiquant un changement des composants.

6. Dispositif dentaire selon l'une quelconque des revendications 1 à 5,
**caractérisé en ce que**
l'unité d'évaluation (16) est prévue à utiliser la caractéristique capturée pour un output d'au moins une information d'interrogation.

7. Dispositif dentaire selon l'une quelconque des revendications précédentes,
**caractérisé en ce que**
l'unité d'évaluation (16) est prévue à utiliser, dans au moins un mode, au moins une caractéristique d'input d'au moins un élément actionneur connectant (30) de l'unité d'input (14) en ajustant l'au moins un paramètre de mélange.

8. Dispositif dentaire selon l'une quelconque des revendications précédentes,
**caractérisé en ce que**
l'unité d'input (14) présente au moins deux symboles d'input (32, 34, 36) graphiques différents, qui sont assignés à des différents paramètres de contrôle et/ou régulation.

9. Dispositif dentaire selon l'une quelconque des revendications précédentes,
**caractérisé en ce que**
l'unité d'input (14) présente au moins une unité d'input des chiffres et/ou des lettres (38).

10. Dispositif dentaire selon l'une quelconque des revendications précédentes,
**caractérisé en ce que**
l'unité d'input (14) présente au moins un élément d'opération tactile (40).

11. Système avec un dispositif dentaire selon l'une quelconque des revendications précédentes et avec au moins une unité des composants.
